(19) Europäisches Patentamt
European Patent Office
Office européen des brevets

(11) **EP 3 615 402 B1**

(12) **EUROPEAN PATENT SPECIFICATION**

(45) Date of publication and mention
of the grant of the patent:
**14.06.2023 Bulletin 2023/24**

(21) Application number: **18792173.9**

(22) Date of filing: **26.04.2018**

(51) International Patent Classification (IPC):
**B62M 19/00** (2006.01)   **B62M 1/36** (2013.01)
**A63B 21/005** (2006.01)

(52) Cooperative Patent Classification (CPC):
**B62M 1/36; B62M 19/00**

(86) International application number:
**PCT/NO2018/050113**

(87) International publication number:
**WO 2018/199772 (01.11.2018 Gazette 2018/44)**

(54) **MULTI-TRACK CYCLE**

MEHRSPURIGEN FAHRRAD

CYCLE À PLUSIEURS VOIES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.04.2017 NO 20170707**

(43) Date of publication of application:
**04.03.2020 Bulletin 2020/10**

(73) Proprietor: **PODBIKE AS**
**4031 Stavanger (NO)**

(72) Inventor: **SØRENSEN, Per Hassel**
**4307 Sandnes (NO)**

(74) Representative: **Håmsø Patentbyrå AS**
**P.O. Box 9**
**4068 Stavanger (NO)**

(56) References cited:
**WO-A1-2015/191536      WO-A1-2016/139660
US-A- 4 262 902      US-A- 4 717 146
US-A- 5 071 117      US-A- 5 584 494
US-A1- 2003 217 874      US-A1- 2008 058 170
US-A1- 2009 072 511      US-A1- 2009 236 821
US-A1- 2012 168 242      US-A1- 2013 081 892
US-A1- 2014 346 752      US-A1- 2014 353 055
US-A1- 2016 264 202      US-B1- 6 402 174
US-B1- 7 156 780**

- **Anonymous: "Elpedal introduces new prototype
Podbike - electrive.com", , 8 February 2018
(2018-02-08), XP055748529, Retrieved from the
Internet:
URL:https://www.electrive.com/2018/02/08/e
lpedal-introduces-new-prototype-podbike/
[retrieved on 2020-11-09]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a multi-track cycle. The invention also relates to a multi-track cycle comprising the pedal generator.

Driving a car, the preferred personal transport mode as of today, requires a lot of space, resources and energy, while producing a lot of pollution during its use. It also minimizes physical exercise, which is required to maintain health and a sound body weight.

A bicycle would be a sustainable mode of transportation. However, it is not in widespread use, except in countries where cycling has been prioritized over cars, such as Denmark and The Nederland's.

Some major problems with bicycles are:

- Lack of protection in case of collisions/accidents;
- Lack of weather protection;
- Inefficient aerodynamic design resulting in high air resistance at speed; and
- Instability on low-frictional surfaces (ice, wet leaves, pebbles on tarmac, etc.)

Some improvements have become available using velomobiles, i.e. recumbent bicycle with aerodynamic cover. To achieve low air resistance, it is important to reduce the frontal area (A) and the air friction coefficient (Cd) of the vehicle, as the air resistance is equal to:

$$F_D = \frac{1}{2}\rho v^2 C_D A$$

Where the $\rho$ is air density and v is speed. To achieve small CoA, a low position of the rider is preferable. However, the rider will compete with wheels for space. To compensate for the extra space requirement, the width between wheels on the same axle could be increased. Since a velomobile is a bicycle-class vehicle, the maximum width is limited to available infrastructure. Bicycle paths are typically designed for single track cycles, i.e. bicycles, limiting maximum track width to around 80 cm.

A challenge with regards to width is that the space required for pedalling interfere with the space required for front wheels and their possibility for turning. Thus, the pedals need to be as close together as possible to avoid an excessively large turning circle of the vehicle.

For stability it is better to use four wheels than fewer wheels, but that makes energy transfer from cyclist to driven wheel challenging. By using series hybrid propulsion as described by Andreas Fuchs and Jürg Blatter in US7156780, the mechanical challenges are reduced, and the additional cost is not high. Especially if the series hybrid propulsion is implemented on velomobiles with electric assist. In addition, the use of two or more motors ease energy transfer and traction.

The use of series hybrid also allows easy adjustment of pedal position as there are no challenges with chain length if pedals and generator is configured as a single unit. Preferably, this adjustment is done using a tool-less locking mechanism so that the vehicle can be adjusted to various persons quickly. Another benefit of adjusting pedal position is that roll-over protection and other passive crash protection may be optimized near the recumbent seat as used on velomobiles. With low mass being critical on human driven vehicles, the seat should basically stay put to optimize protection and minimize weight.

But to be able to transfer energy efficiently from the cyclist to the generator, the pedal generator must be firmly attached so that minimum amount of energy is lost due to bending and stretching of the pedal generator attachment. At the same time, mass should be as low as reasonably possible, and centre of gravity should also be kept as low as possible in the vehicle for optimal stability. Generator mass increases with generator torque, so to keep mass low, the generator should spin much faster than the pedals. In addition, the generator should be located as low as possible in the vehicle. Machined gears are an alternative that is normally used in pedal generators to keep size small. To keep mass low, small generators that require multi-stage gearing and costly machining are often used. By implementing a single synchronous belt with large ratio pulley and a somewhat larger generator it is achievable to get a better mechanical efficiency at a lower cost and only a slight weight penalty. This weight may be moved near the floor in the vehicle to keep a low centre of gravity.

Cost and mass are important issues and must be solved in a commercial version for series production. Cost must be kept low to make the series hybrid competitive against mechanical solutions.

Document US 5071117 A discloses an exercising appliance for either active or passive exercising of limb and other skeletal muscles. The appliance is focused on being relatively inexpensive, lightweight, foldable and thus requiring very little storage space, and that, at the flip of a switch, permits either active or passive exercising.

US2014353055 discloses the preamble of claim 1.

The invention has for its object to remedy or to reduce at least one of the drawbacks of the prior art, or at least provide a useful alternative to prior art.

The object is achieved through features, which are specified in the description below and in the claims that follow.

The invention is defined by the independent patent claim. The dependent claims define advantageous embodiments of the invention.

In a first aspect the invention relates to a multi-track cycle comprising: a pedal generator for generating electric energy to propel the multi-track cycle; and a base frame. The pedal generator comprises:

- a set of pedals;
- a generator mechanically connected to the pedals;
- a frame for fixing a position of the pedals and the generator relative to each other, wherein the frame is connectable to the base frame by a first connection point and a second connection point, wherein the first connection point is connectable to the base frame in alternative positions being discrete or continuously variable, and that a pivotal arm connects the second connection point to the base frame.

The effect of the pedal generator in accordance with the invention is that a position of the pedals is adjustable in both a longitudinal direction and height with reference to the base frame. Moving the single fixing point towards a driver of the vehicle causes the arm to rotate such that the pedals move towards the driver and down towards the base frame of the vehicle. Moving the single fixing point away from the driver causes the arm to rotate in the opposite direction such that the pedals move away from the driver and up from the base frame.

Another effect of the invention is that it provides the possibility of adjusting a distance between the driver and the pedals, without having to move the driver, and at the same time occupying a minimum amount of space within the vehicle.

In one embodiment, the first connection point may connect the frame to the base frame on two sides of the frame. Two sides of the frame may be understood as a left side and a right side as seen from a perspective of a driver of the multi-track cycle. The two-sided connection creates a stiff connection between the frame and the base frame. This is important to avoid bending and displacement of the frame during pedalling, which may result in loss of power from the pedals to the generator.

In one embodiment, the first connection point comprises a retractable pin configured to engage with the base frame in one of the alternative positions. Using a retractable pin has the effect that it is simple and quick to connect/disconnect from the base frame to adjust the position of the pedal generator. The retractable pin may be connected to a mechanism with a handle for the driver of the multi-track cycle to interface with when adjusting the position of the pedal generator.

In one embodiment, the pedal generator may comprise a gearing between the pedals and the generator, the gearing comprising a single synchronous belt with transmission ratio no less than 1:3. Using a belt to connect the pedals and generator, as compared to a chain, has the effect that belts require less maintenance and generate less noise. The transmission ratio between the pedals and the generator may vary, however, it should not be less than 1:3. Increasing the ratio makes it heavier for the driver to pedal, but the generator spins faster, generating more electric energy. Decreasing the ratio makes it easier to pedal, but the generator spins slower, generating less electric energy.

In one embodiment, a width between the pedals may be no larger than 160 mm. By limiting the width between the pedals to 160mm there is sufficient space left in the vehicle to turn the front wheels such that the vehicle may turn within a practical turning radius, while keeping the overall width of the vehicle to a minimum. A larger overall width of the vehicle may render it impossible to drive on existing infrastructure for bicycles. The width is also in accordance with the Q-factor as described reference i (see page 7). In one embodiment, the Q-factor may be 139mm. In one embodiment, the Q-factor may be 120mm.

In one embodiment, the generator may be positioned outside a radius of the pedals. Positioning the generator outside the radius of the pedals has the effect that the size of the generator may vary without conflicting with the pedals as they are rotated. In a preferred embodiment, the generator may be positioned sufficiently far from the pedals such that it does not interfere with the feet or shoes of the driver.

In the following is described an example of a preferred embodiment illustrated in the accompanying drawings, wherein:

Fig. 1:    shows a pedal generator according to one embodiment of the invention and a pedalling human-like driver;

Fig. 2:    shows the pedal generator in two alternative positions with reference to a base frame;

Fig. 3:    shows a top view of the pedal generator and the pedalling human-like driver, and

Fig. 4:    shows a detailed view of the pedal generator.

The figures are depicted in a simplified manner, and details that are not relevant to illustrate what is new with the invention may have been excluded from the figures. The different elements in the figures may necessarily not be shown in the correct scale in relation to each other. Equal reference numbers refer to equal or similar elements.

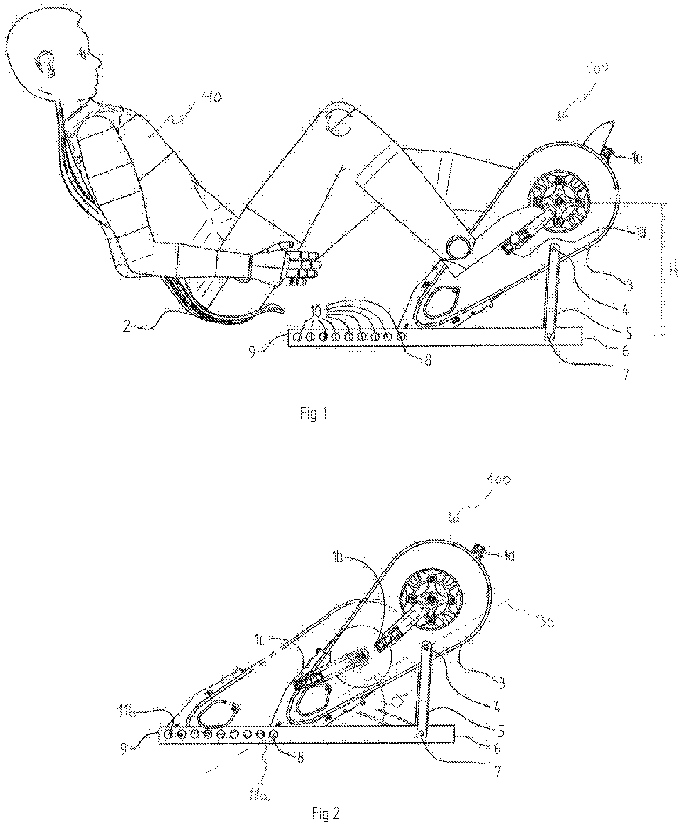

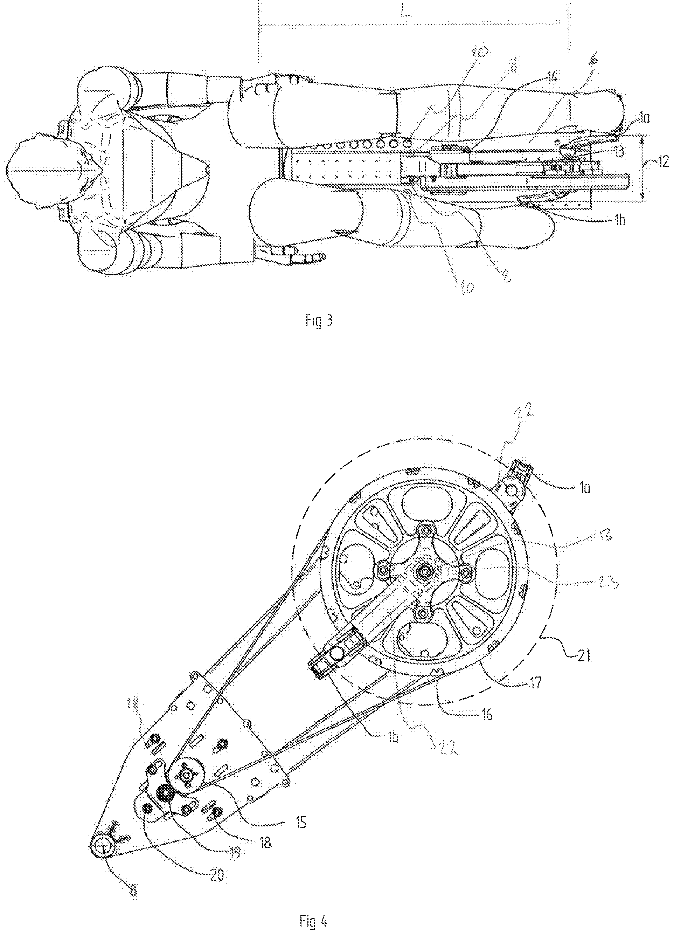

In what follows, the reference numeral 100 indicates a pedal generator according to one embodiment of the invention. Figure 1 shows the pedal generator comprising a set of pedals 1a, 1b connected to a frame 3. The frame 3 also holds a generator 14 (see figure 3) mechanically connected to the pedals 1a, 1b by means of a belt 16 (see figure 4). The frame 3 is provided with a first connection point 8 and a second connection point 4 connecting the frame 3 to a base frame 6 on a multi-track cycle.

The first connection point 8 is a single fixing point and may be connected to the base frame 6 in alternative positions 10. The alternative positions 10 are shown to be discrete. However, it should be understood that the alternative positions 10 also may be continuously variable in another embodiment of the invention. A retractable pin (not shown) fixes the first connection point to one of the alternative positions 10. In an extended position, the retractable pin engages with one of the alternative positions. In a retracted position, the retractable pin disengages from the relevant alternative position 10, and a position of the frame 3 may be adjusted. The base frame 6 is provided with alternative positions 10 on two sides of the frame 3, as may be seen from figure 3. The retractable pin extends out from both sides of the frame 3, fixing the connection point 8 to one of the alternative positions 10 on both sides. This makes the connection between the frame 3 and the base frame 6 stiffer, and the frame 3 less prone to sideways displacement and bending during pedalling.

Figure 1 further shows that the second connection point 4 is connected to the base frame 6 by means of a pivotal arm 5. The arm 5 is pivotal in the sense that it is hinged to the second connection point 4 and the base frame 6. A length of the arm 5 is shown to be fixed. However, in another embodiment of the invention, the arm 5 may be configured with an adjustable length. The arm 5 act as a reinforcement strut to handle sideways forces during pedalling.

As a result of the fixed length of the arm 5, a height (H) of the pedals 1a, 1b relative to the base frame 6 is adjusted when the first connection point 8 is moved between the alternative positions 10. Further, a distance (L) from a driver 40 to the pedals 1a, 1b is also adjusted when the first connection point 8 is moved between alternative positions 10. Thus, an angle ($\sigma$) formed by the base frame 6 and a line between the first connection point 8 and the second connection point 4 vary with the alternative positions 8. The arm 5 has a near vertical position when adapted to long drivers 40 to maximize space for feet and shoes, as indicated in figure 1.

Adjusting the length (L) from the driver 40 and the height (H) from the base frame 6 by adjusting the position of the pedals 1a, 1b rather than a seat 2 simplifies the overall construction of the multi-track cycle. A roll-over protection and other passive crash protection may be optimized near the seat and thus always surround the driver 40. With low mass being critical on human driven vehicles, the seat 2 should basically stay put to optimize protection and minimize weight.

Figure 2 shows the pedal generator 100 in two different positions 11a, 11b. A first position 11a, being the same as in figure 1, is intended for long drivers 40. The length (L) and height (H) is maximized to accommodate for long legs and large feet typical for a long driver 40. A second position 11b is intended for shorter drivers 40. The pedals 1a, 1b are brought closer to the seat 2 and the height (H) is lowered to accommodate for short legs and small feet typical for a short driver 40.

The pedal generator 100 is constructed to require minimum width 12 between the pedals 1a, 1b, as indicated in figure 3. The width 12 is configured to accommodate for comfortable pedalling and sufficient clearance for front wheels to minimize a turning radius.

The width 12 is the same as a Q-factor in cycling nomenclature and a preferred dimension is less than 160 mm. From reference i. the optimum Q-factor based on medical terms was found to be 142 mm, while typical for e-bikes, having similar mechanical design as current pedal generators are 177 mm, see reference ii.

Figure 4 shows that the pedals 1a, 1b comprise a pedal arm 22 and a pedal axle 13. The pedal axle 13 may interface with a standard bottom bracket (not shown) according to ISO 6695, see reference iii. A standard pedal spider (104 BCD) 23 connects the bottom bracket to a standard pulley 17 holding the belt 16.

Figure 4 further shows that the belt 16 is held by a second pulley 15 connected to the generator 14. A guide wheel 19 is attached to one of the generator bolts 20, wherein the guide wheel 19 keeps the belt 16 from jumping over teeth (not shown) on the second pulley 15. The generator 14, the second pulley 15 and the guide wheel 19 is moveable as a single unit in slotted holes 18 to adjust a belt tension. To reduce noise from the belt 16 and pulleys 15, 17, belt tension may be low. Figure 4 also shows that the generator 14 (see also figure 3) is positioned outside a radius 21 of the pedals 1a, 1b. This is to ensure that pedalling is not restricted or obstructed by a size or shape of the generator 14. In a preferred embodiment, as shown in the figures, the generator 14 is positioned sufficiently far from the pedals 1a, 1b such that it does not interfere with the feet/shoes of the driver 40 when pedalling.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

References:

i. Metabolic and kinematic effects of self-selected Q Factor during bike fit https://www.ncbi.nlm.nih.gov/pubmed/24392768

ii. TECHNICAL INFORMATION SHIMANO DRIVE UNIT: DU-E8000 https://www.shimano-steps.com/e-bikes/europe/en/product-information/mtb/mtb-technical-information

iii. ISO standard "Cycles -- Pedal axle and crank assembly with square end fitting -- Assembly dimensions" https://www.iso.org/standard/65002.html

**Claims**

1. A multi-track cycle comprising:

   - a pedal generator (100) for generating electric energy to propel the multi-track cycle; and
   - a base frame (6), wherein the pedal generator (100) comprises:
   - a set of pedals (1a, 1b);
   - a generator (14) mechanically connected to the pedals (1a, 1b);
   - a further frame (3) for fixing a position of the pedals (1a, 1b) and the generator (14) relative to each other, wherein the further frame (3) is connectable to the base frame (6) by a first connection point (8) and a second connection point (4), **characterized in that** the first connection point (8) is connectable to the base frame (6) in alternative positions (10) being discrete or continuously variable, and that a pivotal arm (5) connects the second connection point (4) to the base frame (6).

2. The multi-track cycle according to claim 1, wherein the first connection point (8) connects the further frame (3) to the base frame (6) on two sides of the frame (3)

3. The multi-track cycle according to claim 1 or 2, wherein the first connection point (8) comprises a retractable pin configured to engage with the base frame (6) in one of the alternative positions (10).

4. The multi-track cycle according to any of the claims 1 to 3, further comprising a gearing between the pedals (1a, 1b) and the generator (14), the gearing comprising a single synchronous belt with transmission ratio no less than 1:3.

5. The multi-track cycle according to any of the preceding claims, wherein a width (12) between the pedals (1a, 1b) is no larger than 160 mm.

6. The multi-track cycle according to any of the preceding claims, wherein the generator (14) is positioned outside a radius (21) of the pedals (1a, 1b).

**Patentansprüche**

1. Ein mehrspuriges Fahrrad, bestehend aus:

   - einem Pedalgenerator (100) zur Erzeugung elektrischer Energie für den Antrieb des mehrspurigen Fahrrads; und
   - einem Grundrahmen (6),

   wobei der Pedalgenerator (100) umfasst:

   - eine Pedalgruppe (1a, 1b);
   - einen Generator (14), der mechanisch mit den Pedalen (1a, 1b) verbunden ist;
   - einen weiteren Rahmen (3) zum Fixieren einer Position der Pedale (1a, 1b) und des Generators (14) relativ zueinander, wobei der weitere Rahmen (3) mit dem Grundrahmen (6) durch einen ersten Verbindungspunkt (8) und einen zweiten Verbindungspunkt (4) verbunden werden kann,

   **dadurch gekennzeichnet, dass**
   der erste Verbindungspunkt (8) mit dem Grundrahmen (6) in alternativen Positionen (10) verbunden werden kann, die einzeln oder fortlaufend verstellbar sind, und dass ein Schwenkarm (5) den zweiten Verbindungspunkt (4) mit dem Grundrahmen (6) verbindet.

2. Das mehrspurige Fahrrad nach Anspruch 1, wobei der erste Verbindungspunkt (8) den weiteren Rahmen (3) mit dem Grundrahmen (6) auf zwei Seiten des Rahmens (3) verbindet.

3. Das mehrspurige Fahrrad nach Anspruch 1 oder 2, wobei der erste Verbindungspunkt (8) einen einziehbaren Stift umfasst, der so gestaltet ist, dass er in einer der alternativen Positionen (10) in den Grundrahmen (6) einrastet.

4. Das mehrspurige Fahrrad nach einem der Ansprüche 1 bis 3, ferner umfassend ein Getriebe zwischen den Pedalen (1a, 1b) und dem Generator (14), wobei das Getriebe einen einzigen Zahnriemen mit einem Übersetzungsverhältnis von nicht weniger als 1:3 umfasst.

5. Das mehrspurige Fahrrad nach einem der vorangehenden Ansprüche, wobei eine Breite (12) zwischen den Pedalen (1a, 1b) nicht größer als 160 mm ist.

6. Das mehrspurige Fahrrad nach einem der vorangehenden Ansprüche, wobei der Generator (14) außerhalb eines Radius (21) der Pedale (1a, 1b) angeordnet ist.

**Revendications**

1. Un cycle à plusieurs voies comprenant :

   - un générateur à pédales (100) pour générer de l'énergie électrique pour propulser le cycle à plusieurs voies ; et
   - un cadre de base (6),

   dans lequel le générateur à pédales (100) comprend :

- un ensemble de pédales (1a, 1b) ;
- un générateur (14) mécaniquement raccordé aux pédales (1a, 1b) ;
- un autre cadre (3) pour fixer une position des pédales (1a, 1b) et du générateur (14) les uns par rapport aux autres, dans lequel l'autre cadre (3) est raccordable au cadre de base (6) par un premier point de raccord (8) et un second point de raccord (4),

**caractérisé en ce que**
le premier point de raccord (8) est raccordable au cadre de base (6) dans des positions alternatives (10) étant discret ou continuellement variable, et **en ce qu'**un bras pivotant (5) raccorde le second point de raccord (4) au cadre de base (6).

2. Le cycle à plusieurs voies selon la revendication 1, dans lequel le premier point de raccord (8) raccorde le second cadre (3) au cadre de base (6) sur deux côtés du cadre (3).

3. Le cycle à plusieurs voies selon la revendication 1 ou 2, dans lequel le premier point de raccord (8) comprend une broche rétractable configurée pour s'engager avec le cadre de base (6) dans une des positions alternatives (10).

4. Le cycle à plusieurs voies selon l'une quelconque des revendications 1 à 3, comprenant également un engrenage entre les pédales (1a, 1b) et le générateur (14), l'engrenage comprenant une courroie dentée unique avec un ratio de transmission non inférieur à 1:3.

5. Le cycle à plusieurs voies selon l'une quelconque des revendications précédentes, dans lequel une largeur (12) entre les pédales (1a, 1b) n'est pas supérieure à 160 mm.

6. Le cycle à plusieurs voies selon l'une quelconque des revendications précédentes, dans lequel le générateur (14) est placé à l'extérieur d'un rayon (21) des pédales (1a, 1b).

Fig 1

Fig 2

7

Fig 3

Fig 4

**EP 3 615 402 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7156780 B, Andreas Fuchs and Jürg Blatter
- US 5071117 A
- US 2014353055 A